(19) Europäisches Patentamt
European Patent Office
Office européen des brevets

(11) **EP 4 209 423 A1**

(12) **EUROPEAN PATENT APPLICATION**
published in accordance with Art. 153(4) EPC

(43) Date of publication:
**12.07.2023 Bulletin 2023/28**

(21) Application number: **21863816.1**

(22) Date of filing: **02.09.2021**

(51) International Patent Classification (IPC):
**B64G 1/40** *(2006.01)*     **F03H 99/00** *(2009.01)*

(52) Cooperative Patent Classification (CPC):
**B64G 1/40; F03H 99/00**

(86) International application number:
**PCT/IB2021/058033**

(87) International publication number:
**WO 2022/049524 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 MX 2020009255**

(71) Applicants:
• **Diaz Arias, Herman**
  **Estado de México, 52938 (MX)**

• **Pier Romero, Ma Isabel De Jesús**
  **CP 52938 Atizapán de Zaragoza, Estado de México (MX)**

(72) Inventors:
• **Diaz Arias, Herman**
  **Estado de México, 52938 (MX)**
• **Pier Romero, Ma Isabel De Jesús**
  **CP 52938 Atizapán de Zaragoza, Estado de México (MX)**

(74) Representative: **Isern Patentes y Marcas S.L.**
  **Avda. Diagonal, 463 Bis, 2°**
  **08036 Barcelona (ES)**

(54) **PLANAR ELECTRIC MOTOR FOR AEROSPATIAL USE**

(57) The planar electric motor for aerospace use is a one hundred percent electric thruster or motor and consists of a device capable of generating a thrust force on itself regardless of the environment around it even in vacuum or outer space. The impulse of the motor is produced by the interaction of the force fields generated by the current flowing through a primary conductor and a secondary conductor placed adjacent and parallel to the first conductor one, both being separated by means of an insulating material, the secondary conductor is interrupted, so that in order to complete the circuit, the charge carriers must jump the free space that constitute the secondary conductor breach, to achieve this the motor employs extremely brief high voltage pulses producing small impulses produce by the force of repulsion between both parallel currents that runs in opposite directions.

Figure 2

EP 4 209 423 A1

## Description

### FIELD OF INVENTION

The present invention is developed in the field of electronic engineering, physics engineering and aerospace engineering as it involves design of high-power electronic circuits, management of magnetic fields and electronic properties of matter.

### BACKGROUND OF THE INVENTION

In past decades, many efforts have been made to design and implement efficient motors that can cover the most basic needs of the aerospace industry in particular and the transport industry in general. As for the industry specifically related to satellites and spaceships, great efforts have been made to improve the thrusters and chemical reaction engines, these as the name implies, work basically according to Newton's third law of classical mechanics, which states that any action has a corresponding reaction of equal magnitude and opposite direction; this third law combined with Newton's second law which establishes the relationship between acceleration, mass and force, have allowed the development of the so-called reaction engines, which were in their beginnings chemical motors, which generated a chemical reaction inside the motor either by combustion or oxidation, generating a high internal pressure which in turn was released in the opposite direction of the movement desire to be obtained from the engine; This in the long run, led to a sustained development of this type of motors until it became clear that there was a barrier that prevented these motors from being taken to maximum levels of speed and acceleration, this barrier has been called "The Rocket Equation", which estates what if we want to obtain a higher speed using a chemical or reaction motor, we must throw a greater amount of mass at high speed in the opposite direction to the direction towards which we want to move, which in turn brings as consequence the requirement of a greater amount of fuel which at any given time will represent an increase in the mass to be accelerated, as the mass is in both sides of the equation, it arrives a time when it is no longer possible to increase the speed of an motor or ship this way.

To alleviate the effect of the so-called rocket equation, hybrid motors have been developed using Newton's second and third laws highly increasing the speed of the mass ejected that generates the reaction effects, to achieve this, electric fields have been used to accelerate ions that in this case constitute the mass expelled in the opposite direction, being the expulsion velocities very large it is possible to reduce the ejected mass also known as propellant mass allowing speeds greater than 5 times the maximum speed reached by chemical reaction motors, this kind of motors includes the ion motors and some other varieties such as the so-called Hall effect motors and plasma motors, however all these motors have the problem that they stop working when the propellant finishes, since they are not one hundred percent electric motors but rather hybrid engines that use electrical energy but still require a mass that is accelerated and expelled to generate a reaction and therefore a movement.

We have been working on the design of one hundred percent electric motors for aerospatiale use, as a reference we have filed the patent application MX / A / 2016 / 012856 called "Ultra High Frequency Electromagnetic Motor" PCT / MX2017 / 000105 which refers to a hundred percent electric motor that is based on the unlinked of force fields; likewise Dr. Swayer, has been working on what is called the EmDrive WO2016162676A1 which is an almost completely electric motor which has been shown to generate thrust but of which the principle of operation is not clear, this motor is a derivation of a microwave generator with a resonance cavity that works with continuous waves and not with pulses of electromagnetic fields and bases its operation in some phenomena that apparently happens inside a resonant microwave cavity.

It should also be mentioned that Quanton Dynamics Enterprises Inc. recently unveiled its electric motor which it calls CID "Centrifugal impulse drive" which bases its operation on mobile gyroscopes.

### SUMARY OF THE INVENTION

The Planar Electric Motor for Aerospace use, is a completely electric motor or thruster with planar structure that does not use chemical fuels or propellants as conventional reaction motors do, the latter is because this method does not use to generate impulse the same physical principles on which reaction and ion motor base their operation, a set of principles that we could group within the concept of conservation of momentum or amount of movement, the motor object of the present invention works based on the interaction of magnetic fields within a geometry that allows to generate resulting forces from the consumption of electrical energy only.

To achieve impulse, the Planar Electric Motor for Aerospace use makes use of repulsion or attraction forces generated by placing two conductors very close to each other in parallel but separated by an insulating material whose thickness is made as small as possible to increase the forces of attraction or repulsion between both conductors without risking the generation of unwanted current bridges or short circuits when these conductors are energizing; this motor optimizes its operation by employing insulators with an extraordinarily high insulation coefficient and extremely small thicknesses, in the range of millimeters or fractions of millimeters this leads to a laminar or planar geometry, which in turn allows the manufacture of thrusters made with printed circuit techniques, this also allows the assembly of clusters or multiple arrays that make it possible to increase the force of the thrusters while maintaining a reduced volume.

Unlike other hybrid or electric engines for used in spatial applications, this type of motor does not require the use of ultra-high frequency electronics, since it can operate based on moderate high frequency circuits (less than 1 gigahertz) without losing efficiency in its operation. The main characteristics of the Planar Electric Motor are its shape and size, its 100% electric operation, its reduced volume and low cost in addition to the fact that it can operate indefinitely while it has electrical energy available since it does not use any type of propellant or fuel and does not work based on a principle of momentum exchange.

## DESCRIPTION OF THE DRAWINGS

Figure 1 shows the forces generated between two parallel conductors separated by an insulating material.

Figure 2 shows a modification to the assembly of two parallel conductors separated by an insulator where a fraction of one of the conductors is removed.

Figure 3 shows a basic diagram of the thruster connected to a high-voltage excitation circuit.

Figure 4 shows a cross-sectional diagram of a thruster where the discharge capacitor has been integrated into the structure of the same.

Figure 5 shows a prototype of the motor or thruster.

Figure 6 shows the assembly of a thruster motor on a space satellite.

Figure 7 shows a cluster or a parallel modular assembly.

Figure 8 shows a cluster or radial modular assembly.

Figure 9 shows an example of the motors or thrusters installed on a satellite.

Figure 10 shows a version of the motor or thruster using a superconducting material to increase thrust.

Figure 11 shows the current flow in the modality using a superconductor material powered by a Marx generator.

Figure 12 shows a version of the motor or thruster that uses a discharge tube to control the trigger voltage.

Figure 13 shows the operation of the motor or thruster using superconducting material and a simple RC circuit to power it.

Figure 14 shows the assembly of multiple motors or thrusters operating by overlapping layers to increase thrust with minimal increase in volume.

## DETAILED DESCRIPTION OF THE INVENTION

When two electrical conductors are placed close to each other in parallel paths and separated by a dielectric material placed between them, a force of attraction or repulsion is generated between the two conductors, depending on the respective directions in which the current flows through the conductors, in its simplest conception we can imagine two wires placed in parallel but separated by an insulating material, by making current flow through both conductors in the same direction, the two wires will experience a force of attraction between them, however if both currents flowing through the wires, having opposite directions, both wires will experience a force of repulsion, this force of attraction or repulsion, is given by the equation:

$$F = \frac{u \ I_a \ I_b \ L}{2 \ d\pi}$$

Where u is the magnetic permeability in vacuum, Ia and It are the currents for each of the conductors, d is the distance between the conductors and L is the distance of the parallel path followed by both conductors.

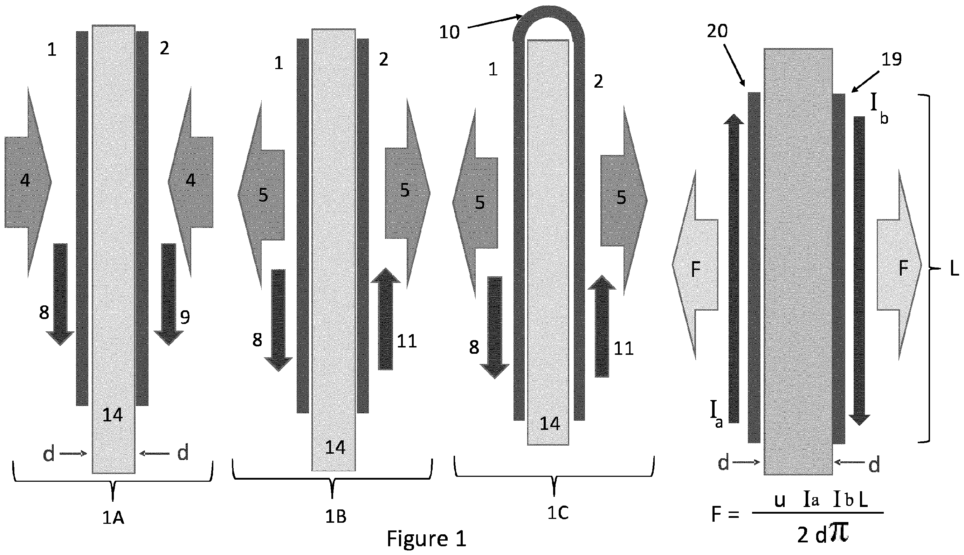

Figure 1 shows the resulting force as a function of the respective direction of each current, so in Figure 1A, the primary conductor (1) and secondary conductor (2) have descending currents (8), (9), and having these currents the same direction they generate a force of attraction (4), an insulating material (14) of thickness (d), is placed between the conductors, if the distance (d) is made smaller, the resultant force will be bigger. Likewise in Figure 1B it can be seen that if the descending current (9) is replaced by a current (11) in the opposite direction, the repulsive force (5), will be a force that will tend to separate the conductors (1), (2). If primary conductor (1) and secondary conductor (2) conductors are joined by a link conductor (10), as shown in Figure 1C, the currents (8) and (11) will be the same traveling in parallel but in opposite directions producing a repulsion force proportional to the square of said current, as we can see in the equation that defines the force between both conductors where the current by conductors Ia, Ib equals the currents (8), (11) and therefore affects in direct and quadratic form the force of repulsion.

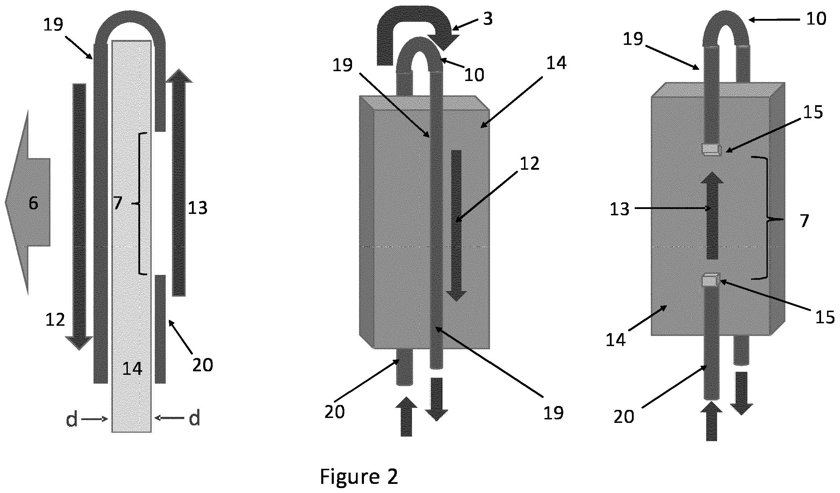

Figure 2 shows the basic principle of operation of the Planar Electric Motor for Aerospace use where it can be seen that if a section of the secondary conductor (2) is removed leaving an empty space, it becomes a free conduction space or discharge gap (7), when applying a high voltage sufficient for the current to overcome said discharge gap by for an instant, the repulsive forces between the conductor sections placed on the front and back faces of the insulated plate will not be balanced, since the electrons that for a moment are completing the flow of current through the gap, will not be mechanically linked to the rest of the device and therefore during that brief moment there will be a resulting force that can be harnessed as an impulse, therefore and for an instant the repulsive force shall be exerted between both parallel sections of conductors but the flow of charge carriers through the free conduction space or discharge gap (7) shall not exert the mechanical force corresponding to this section on the material body of the conductor and insulator arrangement, which shall produce a primary resultant force (6) generating an impulse on this arrangement during the time that the flow of charge carriers along the space of the free conduction or discharge gap (7) last, this is only possible, if the current (13) is maintained, which is the current across the discharge gap (7), and equal to current (12) which is the current through the main conductor; this condition is possible with different electronic circuits feeding this assembly of conductors, insulators and free driving spaces or discharge gap.

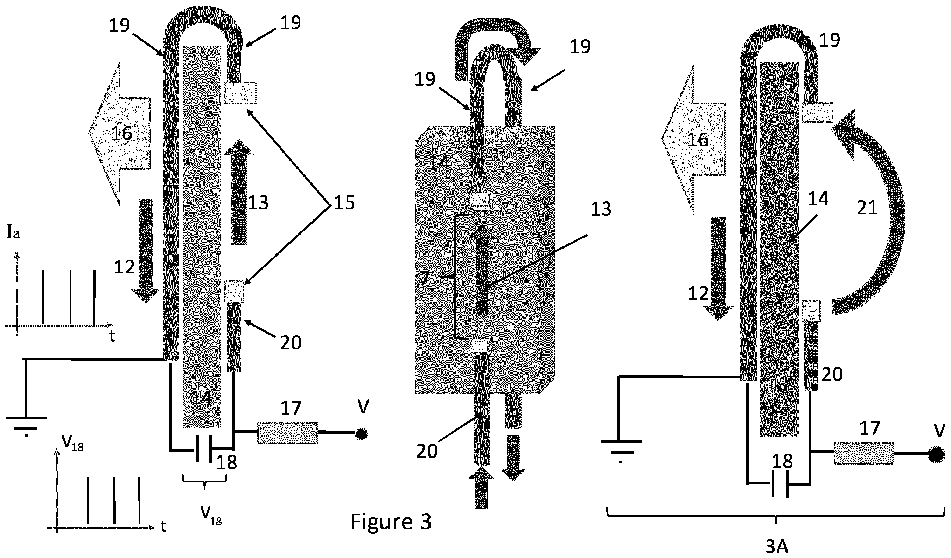

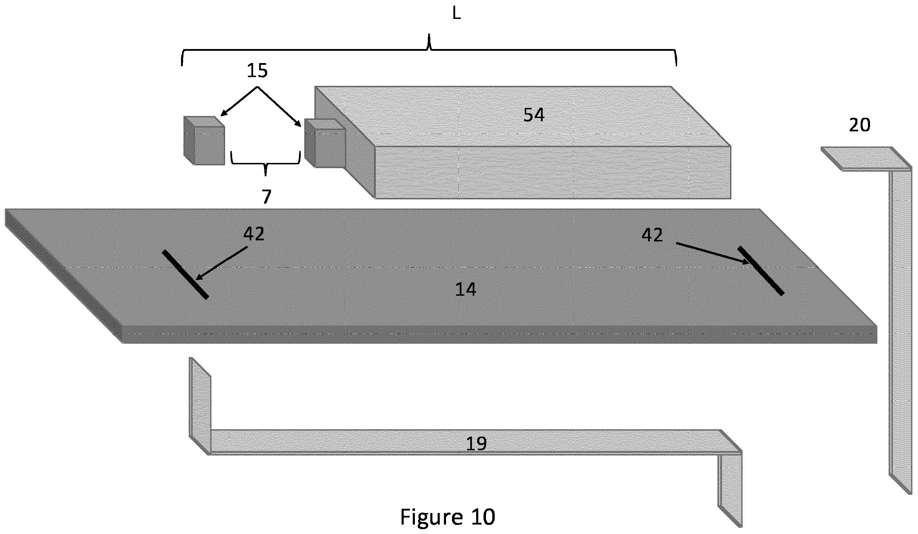

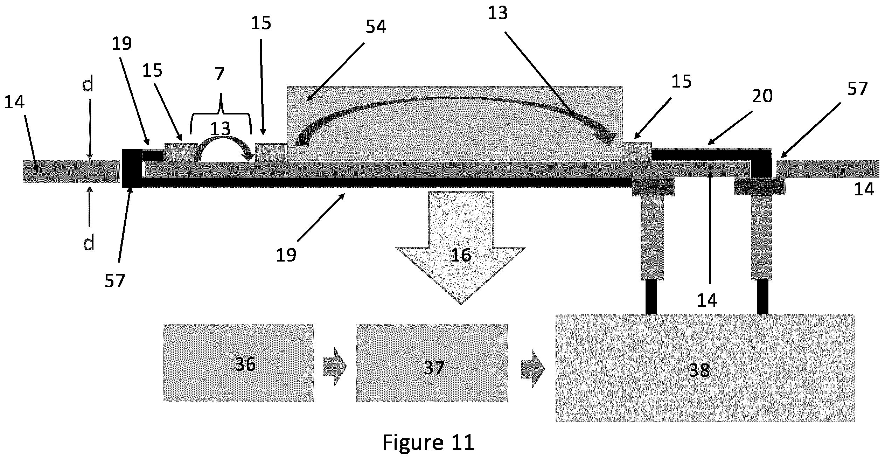

The basic impulse module of our motor, can be seen in Figure 2 where the aforementioned conductors (1), (2), have been joined by a link conductor (10) to obtain a return current (3) that allows both currents (13) (12) to be the same current in opposite directions, a cut is made in the conductor and two discharge electrodes (15) are incorporated at the ends of said cut, being clearly defined a space of free conduction or discharge gap (7) so that the current (12) and current (13) are the same, this can be achieved by connecting the starting conductor (20) (which is the one that is placed deposited or adhered to the back face of the insulating material) and the main conductor (19) (which is one that is placed deposited or adhered to the front face of the insulating material) to a high-voltage source connected to a capacitor that will discharge its charge through the circuit formed by the starting driver (20), the free driving space or discharge gap (7) and the main conductor (19) as can be seen in Figure 3 where the capacitor (18) is charged by the charge limiter (17) until the level of breakdown of the dielectric is reached by the discharge electrodes (15), the current (12) and (13), which finally turns out to be the same, generating a resulting impulse (16), V is a high voltage (several thousand Volts) that allows to overcome the dielectric barrier between the discharge electrodes (15), which have a separation, free conduction space or discharge gap (7) between them, the discharge current will only last a fraction of a second but during that time the repulsive forces generated between the two conductive sections separated by the main insulator (14), will have an imbalance along the free conduction space or discharge gap (7) so the repulsive force between both conduction lines will not have a counterpart that is neutralized with the current section (12) and this imbalance produces an impulse (force per time) being this the force that results in an impulse (16) which constitutes the basic principle of operation of our thruster, in fact, as can be seen in Figure 3A, the trajectory of the charge carriers that constitute the current through the free conduction space or discharge gap (7), becomes a curved discharge current (21), this concept that was already foreseen in theory, we could verify later when testing the first prototypes of the motor, this form of feeding based on what we could call a relaxation oscillator, constitutes the simplest but most functional assembly of this impulse system. It is evident according to the equation of forces mentioned early, that the greater the value of the discharge current and the greater the free conduction space or discharge gap (7), the greater will be the resulting impulse, however, in this relaxation configuration, both parameters depend directly on the value of voltage V, an alternative option that in operation can be very similar to the relaxation oscillator constituted by a circuit containing a charge control element, a capacitor, and a high voltage source is the use of a Marx type generator, with which higher voltage levels and therefore greater impulse can be achieved, the Marx generator is simply an arrangement of resistors, capacitors and diodes that allows to charge a bank of capacitors in parallel to later discharge them in series and generate voltage pulses of hundreds of thousands of volts. The voltage V18, which corresponds to the voltage across the capacitor (18), varies from a voltage higher than that required break the dielectric through the free driving space or discharge gap (7) and a value close to zero, since when the capacitor loses charge, the voltage through it decreases reaching a base value from which the capacitor begins to charge again until the breaking point is reached, this process that is well known, set a frequency of the current (13) pulses Ia which are generated successively, this pulsed operation is the one that allows at any given time the uprooting of the fields generated by the current when crossing the free conduction space or discharge gap (7), this current generates a repulsive force with respect to its physical counterpart current (12) generating on it a force that for an instant will no longer have an opposition counterpart that can establish a total force balance, this imbalance of forces multiplied by the time that each pulse of current last, finally determines the value of the base impulse and this base impulse multiplied by the number of times this cycle is repeated per second give us the total impulse per second generated by the motor. To maximize the impulse, a piece or block (54) made of superconducting material is used, connected as shown in Figure 10 and 11, where it is seen that the superconducting material is placed replacing part of the interrupted conductor that is located on the back face of the insulating plate and in series with free driving space or discharge gap (7), the use of a superconducting material allows to expand the L value of the equation by increasing the trajectory of the carriers (electrons or equivalent) moving parallel to the current flowing through the main conductor (19) which is placed on the anterior face of the insulating material. The flow of current through the superconducting material block (54), has minimal mechanical interaction with the rest of the module that constitutes the thruster, since as we know, the current can flow through the superconductor without friction or resistance and the discharge pulses can be curved inside it with a minimum of mechanical drag, resulting in a greater impulse due to a larger L value, but without the need to raise excessively the value of the voltage source, conductors (19), (20) pass through the main insulator (14) by means of the grooves (57) and are connected as it is show in Figure 10. It is important to note that when the operating temperature is above the maximum temperature to have superconductivity, the thruster will operate as if the superconductor were an ordinary wire or cable connection, that is, the thruster can continue to operate, although at a lower impulse regime.

Figure 11 also shows one of the forms of power with which this unit is excited or energized, using a high voltage Marx generator (38), powered by an oscillator (37) and a direct current source (36), the Marx generator allows the generation of pulses of several tens of thousands of Volts at a good rate of frequency but as already discussed earlier, the thrusters can also be powered with a simple relaxation oscillator consisting of a capacitor, a load resistor and a high voltage direct current source.

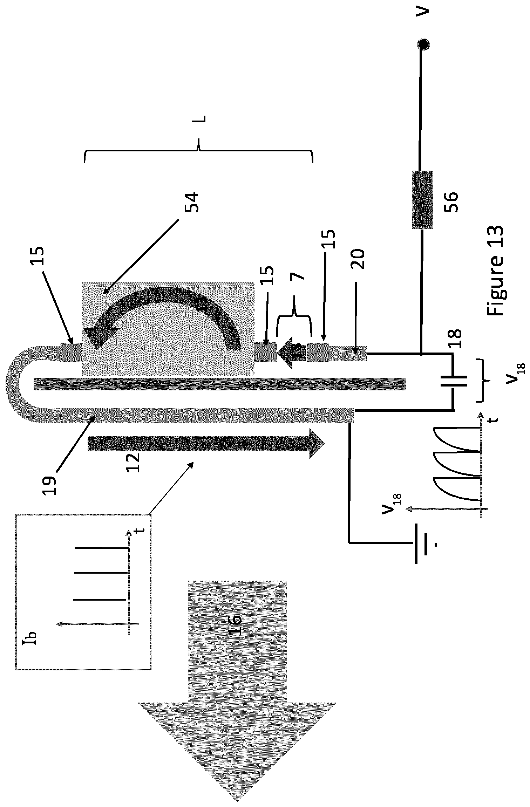

Figure 13, shows a simpler electronic system to feed the thrusters consisting of a high-voltage power supply V while the charge limiter is a resistance (56) and a capacitor (18), this circuit when activated causes the voltage V 18 through the capacitor (18) to rise until it reaches a voltage level high enough to break the dielectric gap between the two discharge electrodes (15), when this occurs, capacitor (18) is partially discharged through the free conduction space or the discharge gap (7) the superconducting material block (54) and the main conductor (19) and this process of charging and discharging is repeated generating high current pulses along the discharge path, resistance (56) is preferably a resistance of high power and high inductance, which allows the capacitor (18), to have deeper discharges and therefore the current (12) pulses to be stronger.

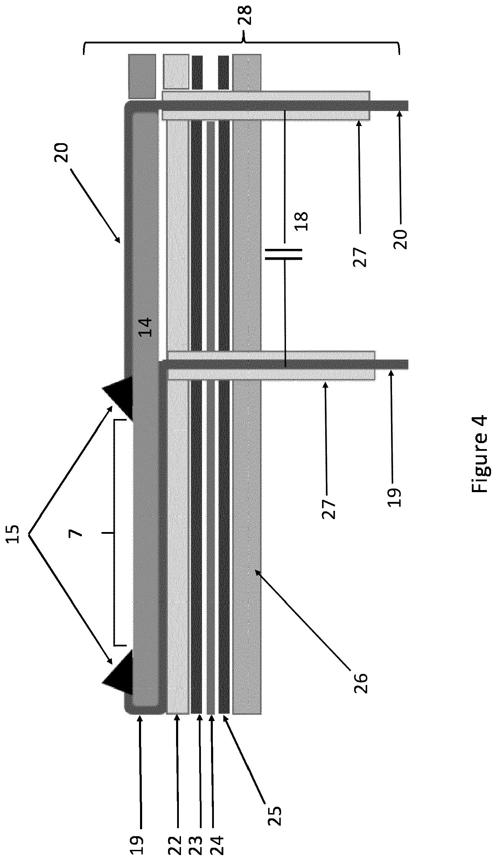

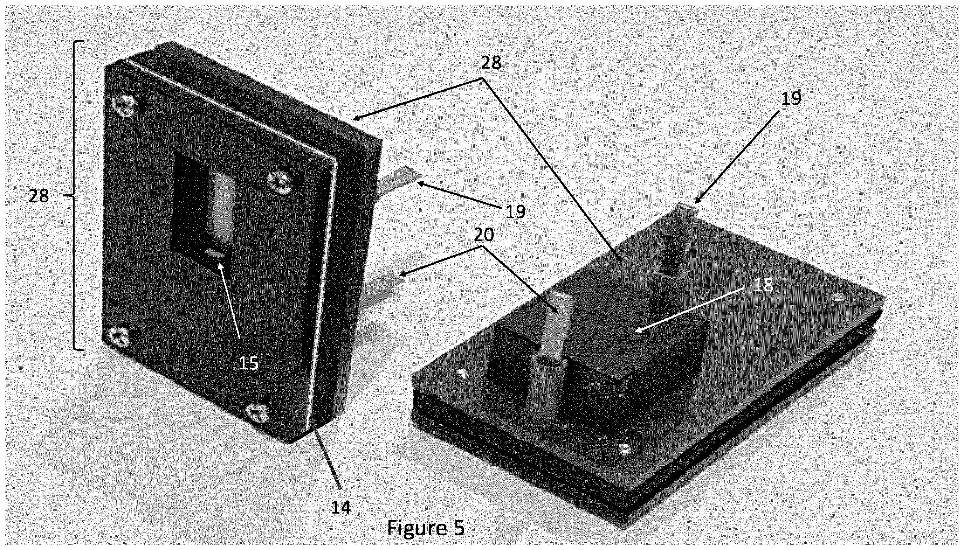

Due to the characteristics of its components, impulse modules can be assembled in extremely compact units that can produce thrusts greater than 10 millinewtons and by their compact nature can integrate concentrations or clusters to cover a wide range of needs, in Figure 5, can be seen one of the impulse modules (28) or thruster that has the dimensions of a credit card but produces thrusts greater than 9 millinewtons, the same figure shows, one of the discharge electrodes (15), the main insulator (14) which in this case is a 1 mm thick glass, also can be seen the main conductor (19) and the starting conductor (20) where both are made in this case of 1 mm thickness copper ribbon, the discharge capacitor (18) can be seen on the back face of the impulse module or thruster and it is very important that it is as close as possible to the thruster space free conduction gap, to achieve this the assembly shown in Figure 4 is used where it can be seen a cross section of the thruster in which the discharge capacitor (18) is replaced by a discharge capacitor integrated into the thruster structure, in this case, discharge capacitor (18) consists of the primary plate of the capacitor (23) and the secondary plate of the capacitor (25), separated by the capacitor insulator (24), a structural plate (26), helps to hold the whole assembly together with an inner structural plate (22), conductors (19), (20) are incorporate the structure through the inlet insulators (27), these elements together with the main insulator (14) and discharge electrodes (15), constitute a complete impulse module or thruster that can also be realized using printed circuit board manufacturing techniques , where the main insulator can be a ceramic substrate of high insulating capacity.

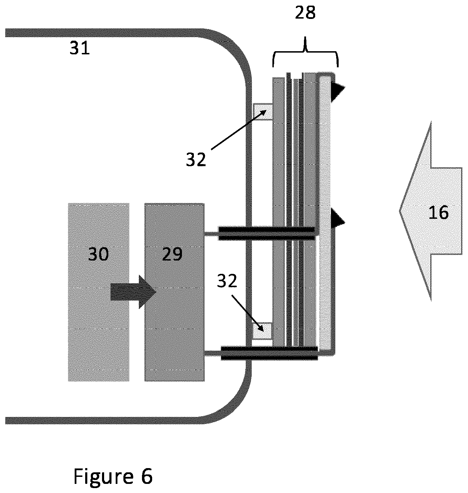

Modules such as the one shown in Figure 5, can be used as main thrusters alone or assembled in impulse clusters, to act as position actuators for satellites as shown in Figure 6 where an impulse module (28) or thruster is shown installed on the side of a satellite (31) by means of fixing brackets (32) that only requires the connection to a high voltage unit (29) and a power control (30) to generate the resulting impulse (16) necessaries to place, move or rotate the satellite as well as maintain the orbit indefinitely since this type of thruster does not require the use of propellant to generate impulse and can operate as long as it has electrical power supply either by solar cells or atomic batteries.

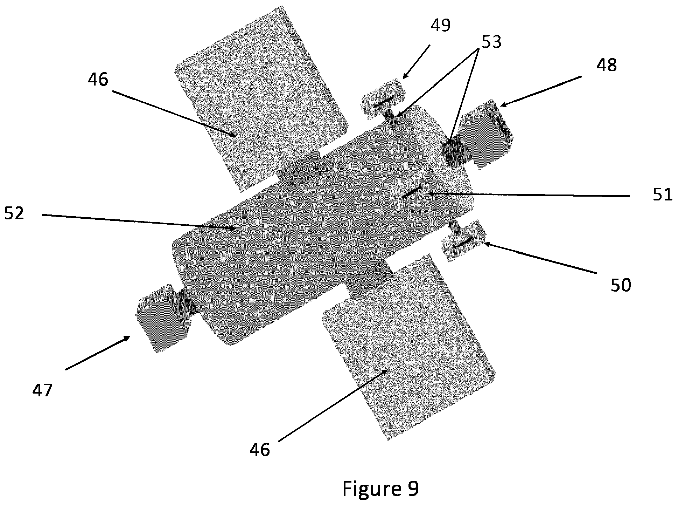

Figure 9 shows how a satellite (52) equipped with solar panels (46) that can be fitted with fully controlled position and impulse thrusters without the use of propellant mounting a front impulse thruster (47), a rear impulse thruster (48), a right rotation thruster (49) a left rotation thruster (50), a pitch thruster (51), by means of a set of supports (53).

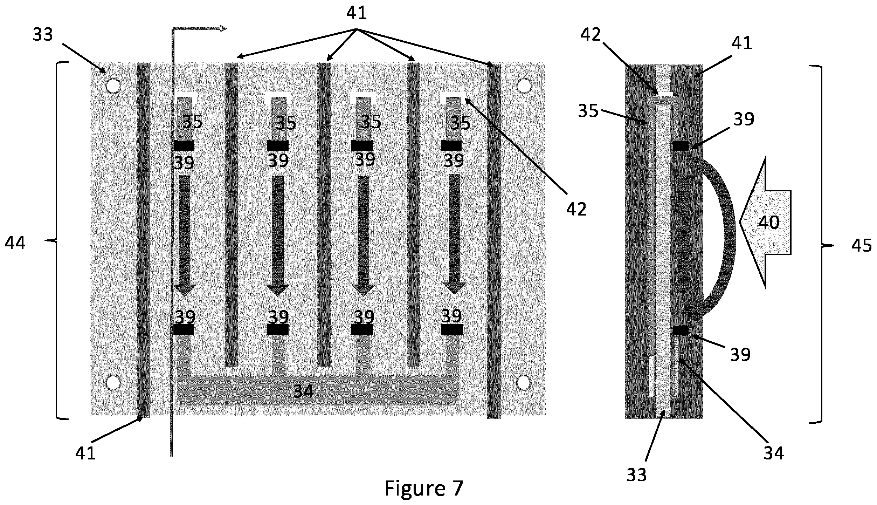

One of the biggest advantages of this aerospace motor or thruster of electric impulse is that this modular design allows it to be manufactured by printed circuit board techniques either in simple units or assemblies or compact clusters of great thrust since thrusters can be assembled as we can see in Figure 7, in this figure can be seen a rectangular arrangement of thrusters (44) assembled over a board make of insulating substrate (33) shared by four thrusters, intermediate insulating plates (41) are used to prevent cross-discharge, due to the use of high voltage supply, in this assembly discharge electrodes (39) are used to cover a function similar to discharge electrodes (15), a multiple starting conductor (34), allows to feed the four impulse units simultaneously. The multiple main conductors (35) pass through the insulating substrate (33) through the passage holes (42), as shown in the cross section (45). This cluster unit generates a resulting total boost (40) large enough to be used as the main impulse unit on a satellite or small spacecraft, but there is complete flexibility as to how these boosters are deployed.

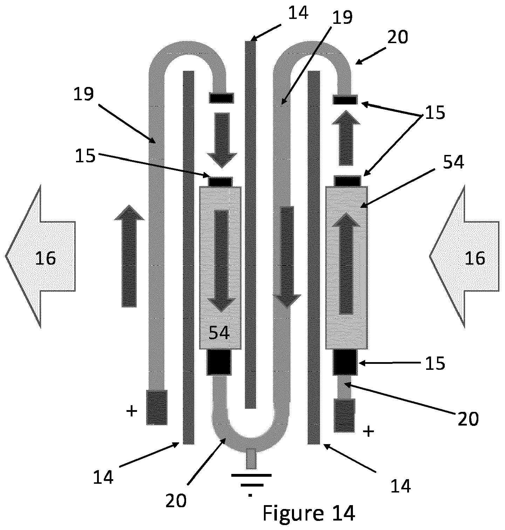

An alternative mode of implementation or assembly of several modules thrusters is shown in Figure 14, this one is a tandem structure where momentum is achieved both by the repulsion effect between parallel conductors and by the attraction effect by parallel conductors where the current flows in the same direction, this type of arrangement makes possible very high-power thrusters armed by layers where the thruster can be integrated into sections of the fuselage of satellites or spacecraft, in this case as well as others where blocks or pieces of superconducting material are used. In Figure 14, the resulting impulse (16), is greater than what could be obtained with two thrusters of equal characteristics, but working in parallel, this is because this tandem implementation allows both the forces of attraction and repulsion to be used simultaneously.

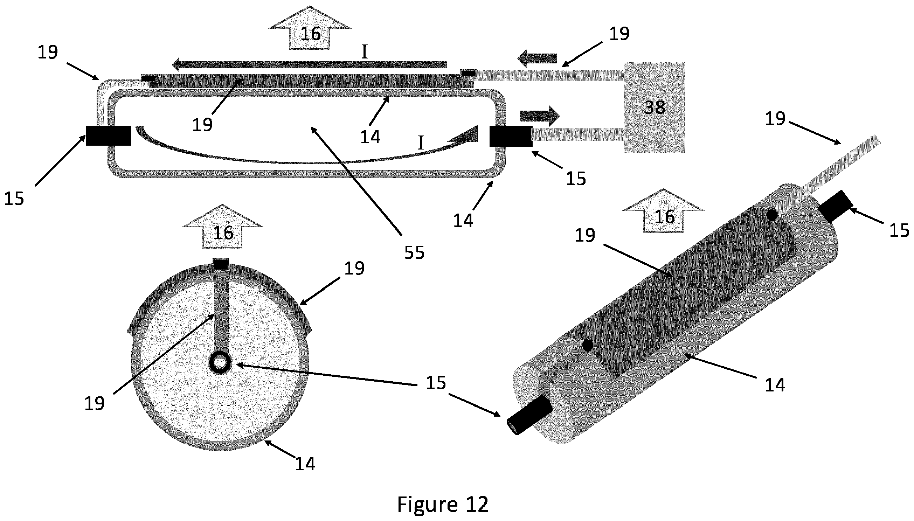

An alternative to the use of superconducting blocks is shown in Figure 12 which shows a version of the thruster that uses a discharge tube filled with a low pressure gas (55), in this case the low pressure gas (55) is contained in the inside of an insulating cylinder which in this case takes the role of the main insulator (14), the main conductor (19) takes the form of a curved sheet placed on the outer face of the tube parallel to the inner discharge path of the tube and where the conductor has at its ends two connection terminals, one of which is attached to one of the discharge electrodes (15), while the other end is connected to the high-voltage supply circuit or Marx generator (38), electrons or charge carriers that close the circuit through the aforementioned discharge tube, travel parallel to the current flowing through the main conductor generating a force of repulsion that cannot be totally counteracted in one of the conductors with respect to the other, thus obtaining an imbalance of forces that originates a momentary impulse that is used to generate the desired movement, this arrangement allows a greater distance L of interaction between the conductors at a minimum cost.

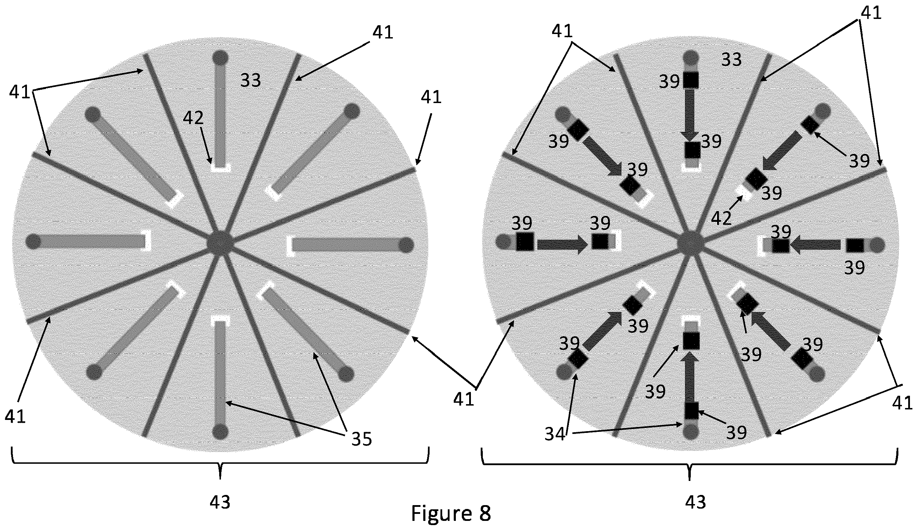

A cluster type arrangement can also be integrated in circular radial shape on the same bases established for the rectangular assembly, the circular arrangement of thrusters (43) shown in Figure 8 has practical applications based on the geometric and in some cases tubular characteristics that usually have the chemical impulse motors that this technology could replace, in this Figure, can be seen main conductors (35) and starting conductors (34) arranged radially that pass from one side to the other of the insulating substrate (33), through passage holes (42) and discharge electrodes (39).

It is important to note that in this radial arrangement, starting conductors and main conductors can be alternated on the same substrate in such a way that some main conductors are placed on the front face of the insulating substrate (33) and others on the rear face of the substrate in an alternating way with respect to the starting conductors, in this way, compact bidirectional thrusters are consolidated, the intermediate insulating plates (41) avoid the generation of spurious arcs.

The Planar Electric Motor for Aerospace use uses a conductor that bends in on itself forming a fork, placed on a very thin insulating material, so that when presenting a voltage difference between the two ends of this conductor, the current will flow in one direction along half of this conductor and in the opposite direction along the other half, this in itself generates a force of repulsion between both halves or sections of the conductor, subsequently, we remove a portion of one of the two sections of the bent conductor, so that in order to close the circuit again, it will be necessary that between the two terminals of the original conductor a high voltage is applied which allows to break the dielectric that corresponds to the removed conductor section, this, in turn, allows a force of repulsion between the two parallel conductors, but since one of the conductors actually no longer exist and their place has been taken by an empty space in which electrons are impelled to move, the repulsion force generated will be realized between the still existing conductor section and these charge carriers that can be electrons, which no longer have a physical or structural link with the device, generating a resulting force between the space and the structure of the device, this simple structure can be replicated by using surface mount technologies such as those used in the manufacture of integrated circuits and printed circuits, given the modular and planar configuration of thrusters assemblies.

Planar manufacturing technologies on insulating substrates such as glass, ceramics, barium oxides and titanium, as well as metal deposition techniques and semiconductors make it possible to create thrusters with a diverse shapes and sizes at very low cost and without moving parts in monolithic structures.

## Claims

1.  A planar electric motor for aerospace use **characterized by** comprising an electrical conductor of rectangular section placed, deposited or adhered on the anterior face of a plate of insulating material in such a way that this conductor folds on itself forming a fork after passing through a passage hole in the insulating plate in such a way that on the opposite side or back face of the insulating plate the extension of said conductor is placed in a path parallel to the section of the conductor placed on the front face, being that the conductor section that is located on the rear face of the insulating plate it interrupted in a section leaving an empty space void of conduction or discharge gap between the remaining sections of the conductor, where these remaining sections of the conductor are connected to both discharge electrodes leaving between them a certain distance and been also characterized because the free ends of this bent and partially interrupted conductor is connected to a capacitor or capacitor bank in a Marx type assembly forming a relaxation oscillator circuit that includes in its discharge path the capacitor array, the interrupted conductor the discharge electrodes and the free conduction space or discharge gap.

2.  The planar electric motor for aerospace use in accordance with claim 1, wherein a part of the interrupted conductor placed, deposited or adhered to the back face of the insulating material plate is replaced by a section of superconducting material.

3.  The planar electric motor for aerospace use in accordance with claims number 1 and 2, where all the elements conforming each thruster are grouped in a modular way, replicated and placed in a rectangular or radial arrangement forming a composite module or cluster that shares a substrate or insulating plate on which all the other elements are deposited forming a common thrust unit and where these assemblies when placed on top of each other in tandem or layers constitute more powerful units with bidirectional impulse capacity.

4. The planar electric motor for aerospace use in accordance with claims number 1, 2 and 3 wherein all the elements that make up the thruster, are assembled with a printed circuit board technique where the substrate of the printed circuit board is the main insulating material of the thruster and over this base are placed the conductors, discharge gaps and discharge electrodes with the required parallel orientations and the discharge capacitors are assembled over the substrate by means of alternating layers of conductive plates and insulating plates forming a compact unit of multi layers.

5. The planar electric motor for aerospace use in accordance with claim 1 wherein the insulating plate has a tubular shape constituting a hollow cylinder within which the discharge gap and the discharge electrodes are contained while a main conductor is placed adhered to the external face de this tube having this conductor the form of a ribbon that runs parallel to the internal discharge path of the tube inside which a gas is placed at low pressure and hermetically sealed, leaving two free electrical ends that are connected to a capacitor that in turn is joined by a link element to a high voltage source or a Marx type generator.

Figure 1

$$F = \frac{u\ I_a\ I_b\ L}{2\ d\ \pi}$$

Figure 2

Figure 3

EP 4 209 423 A1

Figure 4

Figure 5

Figure 6

Figure 7

Figure 8

EP 4 209 423 A1

Figure 9

Figure 10

EP 4 209 423 A1

Figure 11

EP 4 209 423 A1

Figure 12

Figure 13

Figure 14

## INTERNATIONAL SEARCH REPORT

| International application No. |
| --- |
| PCT/IB2021/058033 |

**A.    CLASSIFICATION OF SUBJECT MATTER**

B64G1/40; F03H99/00 (2021.01).

According to International Patent Classification (IPC) or to both national classification and IPC

**B.    FIELDS SEARCHED**

Minimum documentation searched (classification system followed by classification symbols)

(CIP) B64G1/40; F03H99/00 / (CPC) B64G1/40, 1/409; F03H99/00.

Documentation searched other than minimum documentation to the extent that such documents are included in the fields searched

Electronic data base consulted during the international search (name of data base and, where practicable, search terms used)

DERWENT INNOVATION, ESP@CENET, GOOGLE PATENT, INAPI.

**C.    DOCUMENTS CONSIDERED TO BE RELEVANT**

| Category* | Citation of document, with indication, where appropriate, of the relevant passages | Relevant to claim No. |
| --- | --- | --- |
| A | WO2000058623A2 (GRAVITEC INC), 05-10-2000. Abstract, page 8 lines 3 to 32; page 9 lines 1 to 25; figures | |
| A | WO2018062983A1 (DIAZ, H), 05-04-2018. The whole document | |
| A | GB2445180A (ANGELOPOULOS, E), 02-07-2008. The whole document | |

| ☐ Further documents are listed in the continuation of Box C. | ☒ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 December 2021 (13.12.2021) | 17 December 2021 (17.12.2021) |

| Name and mailing address of the ISA/ INAPI, Av. Libertador Bernardo O'Higgins 194, Piso 17, Santiago, Chile Facsimile No. | Authorized officer REYES GUTIERREZ, Carlos Telephone No. 56-2-28870551 |
| --- | --- |

Form PCT/ISA/210 (second sheet) (January 2015)

**INTERNATIONAL SEARCH REPORT**
Information on patent family members

International application No.

PCT/IB2021/058033

| | | | |
|---|---|---|---|
| WO2000058623A2 | 05-10-2000 | WO0058623A3 | 18-01-2001 |
| | | AU3722400A | 16-10-2000 |
| | | US6492784B1 | 10-12-2002 |
| WO2018062983A1 | 05-04-2018 | CA3038914A1 | 05-04-2018 |
| | | CN109982933A | 05-07-2019 |
| | | EA201990770A1 | 30-09-2019 |
| | | EP3521180A1 | 07-08-2019 |
| | | EP3521180A4 | 17-06-2020 |
| | | JP2019532874A | 14-11-2019 |
| | | MX2016012856A | 30-03-2018 |
| | | US2020039666A1 | 06-02-2020 |
| | | ZA201902419B | 27-11-2019 |
| GB2445180A | 02-07-2008 | NONE | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- MX 2016012856 A
- MX 2017000105 W
- WO 2016162676 A1